# EUROPEAN PATENT APPLICATION

(11) **EP 4 583 618 A1**
(43) Date of publication of application: **09.07.2025**
(21) Application number: 23893315.4
(22) Date of filing: 24.08.2023
(51) Int. Cl.: H04W 72/566

(54) **NETWORK SLICE MATCHING METHOD AND APPARATUS**

(30) Priority: 25.11.2022 CN 202211493965
(71) Applicant: Honor Device Co., Ltd., Shenzhen, Guangdong 518040 (CN)
(72) Inventor: PANG, Gaokun, Shenzhen, Guangdong 518040 (CN)
(74) Representative: Gill Jennings & Every LLP
(86) International application number: PCT/CN2023/114807
(87) International publication number: WO 2024/109221

(57) **Abstract**

Embodiments of this application relate to the communication field, and provide a network slice matching method and an apparatus, to meet different service requirements (for example, a low-latency service requirement and a high-reliability service requirement), and improve user experience. The method is as follows: A terminal device obtains corresponding information of an application; the terminal device matches the corresponding information of the application with at least one URSP rule, where the at least one URSP rule includes a first URSP rule, the first URSP rule includes a first network slice identifier, and the first network slice identifier explicitly or implicitly indicates a data processing level of the terminal device; and if the first URSP rule matches the corresponding information of the application, the terminal device processes data traffic of the application based on the data processing level indicated by the first network slice identifier.

## Description

This application claims priority to Chinese Patent Application No. 202211493965.X, filed with the China National Intellectual Property Administration on November 25, 2022 and entitled "NETWORK SLICE MATCHING METHOD AND APPARATUS", which is incorporated herein by reference in its entirety.

### TECHNICAL FIELD

This application relates to the communication field, and in particular, to a network slice matching method and an apparatus.

### BACKGROUND

To meet network differentiation requirements in a 5th generation (5th generation, 5G) mobile communication system, the 3rd generation partnership project (3rd generation partnership project, 3GPP) proposes a network slice (network slice) technology. To be specific, a physical network may be abstractly divided into a plurality of network slices, and each network slice forms an end-to-end logical network.

The network slices are logically isolated from each other, and different network slices may meet different service requirements. For example, for a service requiring low latency, a network slice supporting a low-latency service may be used to execute the service.

However, for a service requiring low latency (for example, a cloud game service), even if the service is executed by using a network slice supporting a low-latency service, overall latency of the service may still be increased due to another reason (for example, terminal internal processing latency for the service is high), and a service requirement is not met, resulting in poor user experience.

### SUMMARY

Embodiments of this application provide a network slice matching method and an apparatus, to meet different service requirements (for example, a low-latency service requirement and a high-reliability service requirement), and improve user experience.

According to a first aspect, an embodiment of this application provides a network slice matching method, including: A terminal device obtains corresponding information of an application; the terminal device matches the corresponding information of the application with at least one route selection policy URSP rule, where the at least one URSP rule includes a first URSP rule, the first URSP rule includes a first network slice identifier, and the first network slice identifier explicitly or implicitly indicates a data processing level of the terminal device; and if the first URSP rule matches the corresponding information of the application, the terminal device processes data traffic of the application based on the data processing level indicated by the first network slice identifier.

Based on the method provided in this embodiment of this application, the terminal device may match the corresponding information of the application with the at least one URSP rule. If the first URSP rule matches the corresponding information of the application, the terminal device may process the data traffic of the application based on the data processing level indicated by the first network slice identifier in the first URSP rule. In this way, the terminal device may transmit the data traffic of the application by using a network slice corresponding to the first network slice identifier, and process the data traffic of the application based on the data processing level indicated by the first network slice identifier. In other words, transmission and processing performance of service data may be jointly ensured by using the network slice and based on the data processing level of the terminal device, to meet service requirements of different services.

In a possible implementation, the corresponding information of the application includes the first network slice identifier. To be specific, the corresponding information of the application may include information about a network slice that the application wishes to use, for example, the first network slice identifier. The first URSP rule matching the corresponding information of the application means that the first network slice identifier included in the first URSP rule is the same as the first network slice identifier in the corresponding information of the application.

In a possible implementation, the corresponding information of the application includes first information, and the first information indicates the first network slice identifier. In other words, there is a mapping relationship between the first information and the information about the network slice that the application wishes to use. The first URSP rule matching the corresponding information of the application means that the first network slice identifier included in the first URSP rule is the same as the first network slice identifier indicated by the first information in the corresponding information of the application.

In a possible implementation, that the first URSP rule includes a first network slice identifier includes: The first URSP rule includes a first route selection descriptor RSD, and the first RSD includes the first network slice identifier. The first URSP rule matching the corresponding information of the application means that the first network slice identifier in the first RSD in the first URSP rule is the same as the first network slice identifier in the corresponding information of the application.

In a possible implementation, the method further includes: The terminal device determines, according to the first URSP rule, a protocol data unit PDU session corresponding to the application. The first URSP rule may include parameters such as S-NSSAI, a DNN, and an SSC mode. The PDU session corresponding to the application may be a PDU session supporting the foregoing parameters in the first URSP rule.

In a possible implementation, that the first network slice identifier explicitly indicates a data processing level of the terminal device includes: The first network slice identifier includes first indication information, and the first indication information indicates the data processing level of the terminal device, where the first indication information includes a plurality of values, each of the plurality of values corresponds to one data processing level, and different values correspond to different data processing levels. In this way, the data processing level of the terminal device may be determined based on the first indication information in the first network slice identifier, and the terminal device may transmit the data traffic of the application by using a network slice corresponding to the first network slice identifier, and process the data traffic of the application based on the data processing level indicated by the first network slice identifier. In other words, transmission and processing performance of service data may be jointly ensured by using the network slice and based on the data processing level of the terminal device, to meet service requirements of different services.

In a possible implementation, that the first network slice identifier explicitly indicates a data processing level of the terminal device includes: The first network slice identifier includes second indication information, the second indication information indicates the data processing level of the terminal device, and the data processing level of the terminal device has a correspondence with a network slice type or a network slice priority corresponding to the first network slice identifier. For example, a type of the first network slice indicated by the first network slice identifier is a low-latency slice, and the second indication information may indicate that the data processing level of the terminal device is a low-latency processing level. The low-latency processing level refers to that service data is preferentially processed inside the terminal device, for example, scheduling is preferentially performed, queuing is preferentially performed, sending is performed in advance by jumping a queue, and sending is preferentially performed. In this way, when a network slice corresponding to a service is a low-latency slice, a terminal device internal processing level for the service is a low-latency processing level, so that a service requirement (for example, low latency) of the service can be ensured. A problem of poor service experience caused by low network slice latency but high terminal device internal processing latency is avoided, enabling an advantage of a low-latency network slice to be fully utilized and meeting a service requirement.

In a possible implementation, the first network slice identifier includes a slice service type SST and a slice differentiator SD, and the SST or SD includes the first indication information or the second indication information.

In a possible implementation, the data processing level of the terminal device includes at least one of a processing priority, a processing latency level, a processing rate level, a processing security level, a processing reliability level, or a processing bandwidth level.

In a possible implementation, before the terminal device obtains corresponding information of an application, the method further includes: The terminal device sends a registration request message to a first network device, where the registration request message carries the first network slice identifier; and the terminal device receives a registration accept message from the first network device, where the registration accept message includes information about a slice allowed to be accessed. The registration accept message may include allowed NSSAI (allowed NSSAI), and the allowed NSSAI indicates S-NSSAI allowed by a network in requested NSSAI of the terminal device.

In a possible implementation, the method further includes: The terminal device sends a PDU session request message to an access and mobility management function AMF network element, where the PDU session request message includes the first network slice identifier. The terminal device may initiate, by using the PDU session request message, establishment of a PDU session supporting the first network slice identifier, to associate the application with the established PDU session.

In a possible implementation, the corresponding information of the application further includes an identifier of the application, the first URSP rule further includes a traffic descriptor, and the traffic descriptor matches the identifier of the application.

According to a second aspect, this application provides a computer program product. When the computer program product runs on a computer, the computer is enabled to perform the method according to any one of the foregoing aspects and the possible design manners of the foregoing aspects.

According to a third aspect, this application provides a computer-readable storage medium. The computer-readable storage medium includes computer instructions. When the computer instructions are run on a terminal device (such as a mobile phone), the terminal device is enabled to perform the method according to any one of the first aspect and the possible implementations of the first aspect.

According to a fourth aspect, an embodiment of this application provides a communication apparatus, including a processor. The processor is coupled to a memory, the memory stores program instructions, and when the program instructions stored in the memory are executed by the processor, the apparatus is enabled to implement the method according to any one of the foregoing aspects and the possible design manners of the foregoing aspects. The apparatus may be a terminal device, or may be a component of a terminal device, such as a chip.

According to a fifth aspect, this application provides a chip system. The chip system includes one or more interface circuits and one or more processors. The interface circuit and the processor are interconnected via lines.

The foregoing chip system may be applied to a terminal device including a communication module and a memory. The interface circuit is configured to receive a signal from a memory of a first terminal device and send the received signal to the processor, and the signal includes computer instructions stored in the memory. When the processor executes the computer instructions, the terminal device may perform the method according to any one of the foregoing aspects and the possible design manners of the foregoing aspects.

It may be understood that, for beneficial effects that can be achieved by the computer program product according to the second aspect, the computer-readable storage medium according to the third aspect, the communication apparatus according to the fourth aspect, and the chip system according to the fifth aspect, refer to the beneficial effects according to any one of the first aspect and the possible design manners of the first aspect. Details are not described herein again.

### BRIEF DESCRIPTION OF DRAWINGS

FIG. 1 is a schematic diagram of a composition structure of a type of S-NSSAI according to an embodiment of this application;
FIG. 2 is a schematic diagram of a composition structure of a URSP according to an embodiment of this application;
FIG. 3 is a schematic diagram of an architecture of a system according to an embodiment of this application;
FIG. 4 is a schematic diagram of a hardware structure of a terminal device according to an embodiment of this application;
FIG. 5 is a schematic flowchart of a method according to an embodiment of this application;
FIG. 6 is a schematic diagram of a composition structure of another URSP according to an embodiment of this application;
FIG. 7 is a schematic diagram of a composition structure of another type of S-NSSAI according to an embodiment of this application;
FIG. 8 is a schematic diagram of URSP rule matching according to an embodiment of this application;
FIG. 9 is a schematic diagram of URSP rule matching according to an embodiment of this application; and
FIG. 10 is a schematic diagram of a structure of a chip system according to an embodiment of this application.

### DESCRIPTION OF EMBODIMENTS

For clear and concise description of the following embodiments, brief introduction to a related concept or technology is first provided.
1. Network slice: A physical network may be abstractly divided into a plurality of network slices, and each network slice may form an end-to-end logical network. Network slices are logically isolated from each other and do not affect each other.

Usually, to meet different communication requirements, the network slice may be divided into a plurality of types, may be, for example, but is not limited to, an enhanced mobile broad band (enhanced mobile broad band, eMBB) type, a massive machine type connection (massive machine type connection, mMTC), and an ultra reliability and low latency connection (ultra reliability and low latency connection, uRLLC) type.

Network features of different types of network slices are different. For example, an eMBB network slice is required to have a feature of supporting a large-bandwidth and low-latency service. An mMTC network slice is required to have a feature of supporting massive access and a small bandwidth. A uRLLC network slice is required to have a feature of high reliability and low latency.

It can be learned that a supported application service type, end-to-end latency, a single terminal maximum rate, and the like are all feature attributes of the network slice, and these feature attributes depend on a design of the slice.

With introduction of a network slice technology, an operator may provide "dedicated" networks for users with different service requirements, to ensure a high-quality service level and meet differentiated service requirements. The users can also use more powerful application products, further promoting development of blue ocean of a new industry application, to achieve objectives of improving network resource use efficiency, optimizing network construction investment of an operator network, and constructing a flexible and agile 5G network.

2. Single network slice selection assistance information (single network slice selection assistance information, S-NSSAI) is for uniquely representing a network slice.

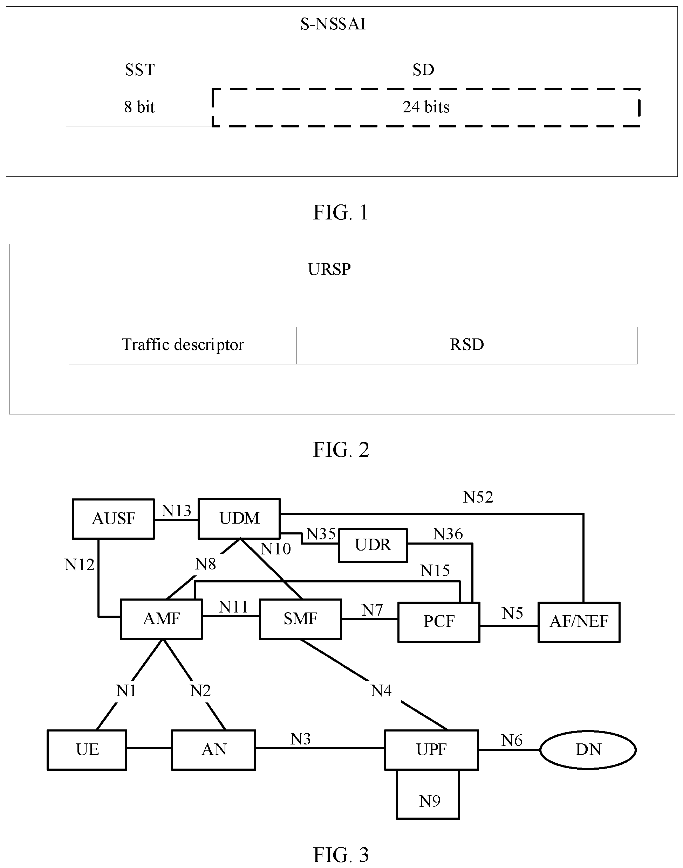

As shown in FIG. 1, a composition structure of a piece of S-NSSAI may include a slice service type (slice service type, SST) and a slice differentiator (slice differentiator, SD). The SST refers to an expected network slice behavior in terms of functions and services. The SD is optional information and adds a slice/service type to distinguish a plurality of network slices of a same slice/service type. For example, the SST may include 8 bits (bits), and the SD may include 24 bits.

3. Network slice selection assistance information (network slice selection assistance information, NSSAI): The NSSAI indicates a set of one or more pieces of S-NSSAI. Correspondingly, the NSSAI may represent one or more network slices.

4. Packet data unit (Packet Data Unit, PDU): A 5G network transmits, in the form of a data packet, data sent and received between a terminal device (for example, user equipment (user equipment, UE)) and an external network, and data packets of users are usually referred to as PDUs.

5. PDU session (session): The PDU session is a session service that implements PDU connectivity between UE and a data network (data network, DN), and is identified by a PDU session ID.

6. UE route selection policy (UE route selection policy, URSP): Usually, when creating a needed network slice for a customer on a physical infrastructure of a communication network based on a customer order, an operator usually signs a service level agreement (service level agreement, SLA) of the network slice with the customer based on a service requirement. In a public land mobile network (public land mobile network, PLMN) of the operator, the entire network does not necessarily support a same network slice set (network slice set). The operator may divide different slice sets based on an area or even a single base station. In this way, different area networks may correspond to different slices. Therefore, in a non-roaming scenario, a user may access a needed slice only through some areas in a home network, or in a roaming scenario, a user may access a needed slice only through some areas in some visited networks.

Currently, for a routing problem of a user, the URSP is defined in a standard, mainly to determine PDU session parameters, such as a network slice, a data network name (data network name, DNN), and a session service continuity mode (session service continuity mode, SSC mode), needed by different applications (applications, APPs) or services.

A terminal may determine, based on the URSP, a corresponding PDU session parameter based on a network requirement of an APP or a service, and establish a PDU session based on the parameter. Then, data of the APP or the service is transmitted by using the established session.

As shown in FIG. 2, the URSP may include a traffic descriptor (traffic descriptor, TD) and one or more route selection descriptors (route selection descriptors, RSDs). Certainly, the URSP may further include another parameter. This is not limited in this application.

The traffic descriptor is for matching service information (an application identifier, a traffic identifier, a service identifier, or the like), to distinguish different services based on an application identifier or an identifier of another type. For example, a terminal modem (modem) may respectively match application identifiers (APP IDs) with traffic descriptors in all URSP rules according to priorities of one or more URSP rules, from highest to lowest. There are a plurality of types of traffic descriptors, for example, Application descriptors (which may include an operating system identifier (OSId)+an application identifier (OSAppId), for example, WeChat^{®} under an Android operating system may be represented as android+com.wechat), and IP descriptors (for example, a destination IP address corresponding to an initiating service). After a traffic descriptor matching an application is determined, a PDU session for transmitting traffic of the application is determined based on an RSD (that is, an RSD in a URSP rule corresponding to the traffic descriptor) corresponding to the traffic descriptor. The RSD includes parameters such as a DNN, S-NSSAI, and an SSC mode. The PDU session for transmitting the traffic of the application is a PDU session supporting the parameters such as the DNN, the S-NSSAI, and the SSC mode in the corresponding RSD (the RSD corresponding to the traffic descriptor matching the application). In other words, after the traffic descriptor matching the application is determined, the PDU session for transmitting the traffic of the application may be determined based on the RSD corresponding to the matched traffic descriptor.

7. URSP matching: When determining that a particular service/application needs to be initiated, UE first matches a to-be-initiated service/application with a traffic descriptor in URSP rules according to a priority order of the URSP rules.

If a specific URSP rule (where the URSP rule may also be a default URSP rule (which may also be referred to as a wildcard URSP rule), for example, a traffic descriptor is in the match-all form) is matched, the UE further needs to determine, based on a current RSD of the URSP rule, a slice S-NSSAI needed for the service, and determine whether the slice S-NSSAI belongs to an allowed NSSAI of a current network. Specifically, in a roaming scenario, the terminal needs to determine whether the slice S-NSSAI belongs to a current allowed NSSAI of a visited network. In a non-roaming scenario, the terminal needs to determine whether the slice S-NSSAI is in a current allowed NSSAI of a home network. If the S-NSSAI is not in the allowed NSSAI, the UE continues to perform matching on a subsequent URSP rule or a subsequent RSD according to a URSP priority/RSD priority until it is determined that a slice S-NSSAI allowed to be used by the service appears in the allowed NSSAI and the slice S-NSSAI is accepted by a network side.

Currently, an operator may provide "dedicated" networks for users with different service requirements based on a network slice technology, to ensure a high-quality service level and meet differentiated service requirements. For example, for a service requiring low latency, a network slice supporting a low-latency service may be used to execute the service. However, for a service requiring low latency (for example, a cloud game service), even if the service is executed by using a network slice supporting a low-latency service, overall latency of the service may still be increased due to another reason (for example, terminal internal processing latency for the service is high), and a service requirement is not met, resulting in poor user experience.

A cloud game service is used as an example. In the cloud game, based on a real-time audio/video stream technology, a server end sends a real-time audio/video stream to a client. The client sends a control instruction stream to the server end, and the server end applies the received control instruction to the game. The cloud game may include games such as an action game, a combat game, a multiplayer online battle arena (multiplayer online battle arena, MOBA) game, a first-person shooting game, and a car racing game. The cloud game has a high requirement on operation response latency, has a high requirement on a bandwidth, and also has a strict requirement on jitter. In other words, service requirements of the cloud game are: low latency, large bandwidths, and no (small) jitter. Therefore, a network slice supporting low latency, large bandwidths, and no (small) jitter may be matched for the cloud game, to better meet the service requirements of the cloud game.

However, a network loop of the cloud game relates to processes such as server end game rendering, audio and video coding, network transmission, and client audio and video decoding and rendering, and these processes have a certain degree of latency. Currently, even if a network slice meeting low latency requirement is selected, only latency in the network transmission process can be reduced, and it is difficult to reduce latency in another process (for example, the client audio and video decoding and rendering process). Consequently, it is difficult to ensure low latency between end to end of the cloud game.

For example, it is assumed that latency of a network slice A is low latency of 20 ms, and latency of a network slice B is medium latency of 50 ms. Latency of a terminal internal processing priority C is high latency of 100 ms, and latency of a terminal internal processing priority D is low latency of 15 ms. For a service requiring low latency (for example, a cloud game service), even if the network slice A with the low latency is selected, if the terminal internal processing priority is C (where latency reaches 100 ms), overall latency of the cloud game is increased. It is even worse than selecting the higher-latency network slice B and the terminal internal processing priority D. In other words, latency of A+C is greater than latency of B+D. An advantage of the network slice cannot be brought into play, and it is difficult to meet the low-latency requirement of the cloud game.

To resolve the foregoing problem, an embodiment of this application provides a network slice matching method, to better meet different service requirements (for example, a low-latency service requirement and a high-reliability service requirement), and improve user experience.

The network slice matching method provided in this embodiment of this application is applied to a communication system that performs communication by using a network slice, for example, a 5G system, or a subsequent evolved system, or another system.

FIG. 3 is an example architecture of a communication system applicable to an embodiment of this application. The communication system includes network elements such as an authentication server function (authentication server function, AUSF), a unified data management (UDM), a user data repository (user data repository, UDR), an access and mobility management function (access and mobility management function, AMF), a session management function (session management function, SMF), a policy control function (policy control function, PCF), an application function (application function, AF)/network exposure function (network exposure function, NEF), a user plane function (user plane function, UPF), and an access network (access network, AN), a DN, and UE. The AN includes a wired access network and a radio access network (radio access network, RAN). The RAN may include a next generation NodeB (next generation NodeB, gNB).

The UE accesses the AN in a wireless or wired manner. The wireless manner and may be, for example, accessing the AN through wireless-fidelity (wireless-fidelity, Wi-Fi), or accessing the AN through a cellular network (such as E-UTRA or NR). The UE communicates with the AMF through N1. The AN communicates with the UPF through N3, and the AN communicates with the AMF through N2. The UPF communicates with the SMF through N4, and the UPF communicates with the DN through N6. The AMF communicates with the UDM through N8. The SMF communicates with the AMF through N11, the SMF communicates with the UDM through N10, and the SMF communicates with the PCF through N7. The AMF communicates with the AUSF through N12, and the AUSF communicates with the UDM through N13. The AF communicates with the PCF through N5. The UDM communicates with the UDR through N35. The UDM communicates with the AF/NEF through N52. The UDR communicates with the PCF through N36. The AMF communicates with the PCF through N15. In the system shown in FIG. 3, the AF/NEF means that the AF interacts with a core network network element through the NEF.

In the system shown in FIG. 3, functions of some network elements are as follows.

AF mainly transmits a requirement of an application side to a network side, for example, a QoS requirement or a user status event subscription. The AF may be a third-party functional entity, or an application service deployed by an operator, such as an IMS voice call service. When an application functional entity of the third-party application interacts with a core network, the NEF may perform authorization. For example, a third-party AF sends a request message to the NEF, and the NEF determines whether the AF is allowed to send the request message. If the verification is successful, the request message is forwarded to a corresponding PCF or UDM.

UDM is mainly responsible for functions such as managing subscription data and user access authorization.

UDR is mainly responsible for a function of storage and access of subscription data, policy data, application data, and other types of data.

In addition, the UDR may further add a corresponding S-NSSAI to a Subscribed NSSAI of a user, and add subscription values such as a bandwidth allowed to be used by the user and a QoS guarantee under the SNSSAI.

PCF is mainly responsible for a policy control function such as session and service flow level charging, quality of service (quality of service, QoS) bandwidth guarantees and mobility management, and UE policy decision. In the architecture, PCFs connected to the AMF and the SMF respectively correspond to an AM PCF (that is, a PCF for access and mobility control) and an SM PCF (that is, a PCF for session management). In an actual deployment scenario, the AM PCF and the SM PCF may not be a same PCF entity.

SMF mainly performs a function such as session management, execution of a control policy delivered by a PCF, selection of a UPF, and allocation of a UE internet protocol (internet protocol, IP) address.

AMF mainly performs a function such as mobility management and access authentication/authorization. In addition, the AMF is also responsible for transmitting a user policy between the UE and the PCF.

UPF is an interface UPF with a data network, and performs a function such as user plane data forwarding, session/flow level-based charging statistics, and a bandwidth limitation.

AN corresponds to different access networks, for example, various manners such as wired access and radio base station access.

In the architecture shown in FIG. 3, some interface functions are described as follows.
1. N7 is an interface between the PCF and the SMF, and is for delivering PDU session granularity and a service data traffic granularity control policy.
2. N15 is an interface between the PCF and the AMF, and is for delivering a UE policy and an access control-related policy.
3. N5 is an interface between the AF and the PCF, and is for delivering an application service request and reporting a network event.
4. N4 is an interface between the SMF and the UPF, and is for transmitting information between a control plane and a user plane, including delivery of a forwarding rule, a QoS control rule, a traffic statistics rule, and the like from the control plane to the user plane, and reporting of user plane information.
5. N11 is an interface between the SMF and the AMF, and is for: transmitting PDU session tunnel information between the AN and the UPF, transmitting a control message to be sent to the UE, transmitting radio resource control information to be sent to the AN, and the like.
6. N2 is an interface between the AMF and the RAN, and is for transmitting radio bearer control information from a core network side to the AN, and the like.
7. N1 is an interface between the AMF and the UE, is access-independent, and is for transmitting a QoS control rule to the UE, and the like.
8. N8 is an interface between the AMF and the UDM, is used by the AMF to obtain subscription data and authentication data that are related to access and mobility management from the UDM, and is used by the AMF to register information related to current mobility management of UE with the UDM, and the like.
9. N9 is used for user plane data forwarding between the UPF and the UPF
10. N10 is an interface between the SMF and the UDM, is used by the SMF to obtain subscription data related to session management from the UDM, and is used by the SMF to register information related to a current session of UE with the UDM, and the like.
11. N35 is an interface between the UDM and the UDR, and is used by the UDM to obtain user subscription data information from the UDR.
12. N36 is an interface between the PCF and the UDR, and is used by the PCF to obtain subscription data related to a policy and information related to application data from the UDR.

Optionally, names of all the network elements and names of interfaces between all the network elements in FIG. 3 are merely an example. During specific implementation, the names of all the network elements and the names of the interfaces between all the network elements may have other names, or the network element may be referred to as an entity. This is not specifically limited in this embodiment of this application. All or some of the network elements in FIG. 3 may be physical entity network elements, or may be virtualized network elements. This is not limited herein.

Optionally, the architecture may further include other network elements, such as an operation administration management (operation administration management, OAM) network element, a network slice selection function (network slice selection function, NSSF), and a network repository function (network repository function. NRF). This is not limited in this embodiment of this application.

Further, the 5G communication system shown in FIG. 3 includes a system in a non-roaming scenario and a system in a roaming scenario. Optionally, a system in each scenario may be a system based on a service-oriented interface, or may be a system based on a reference point. For a detailed description of the system based on the service-oriented interface and the system based on the reference point, refer to a conventional technology, and details are not described herein again.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of a network architecture and emergence of new service scenarios, the technical solutions provided in embodiments of this application are also applicable to similar technical problems.

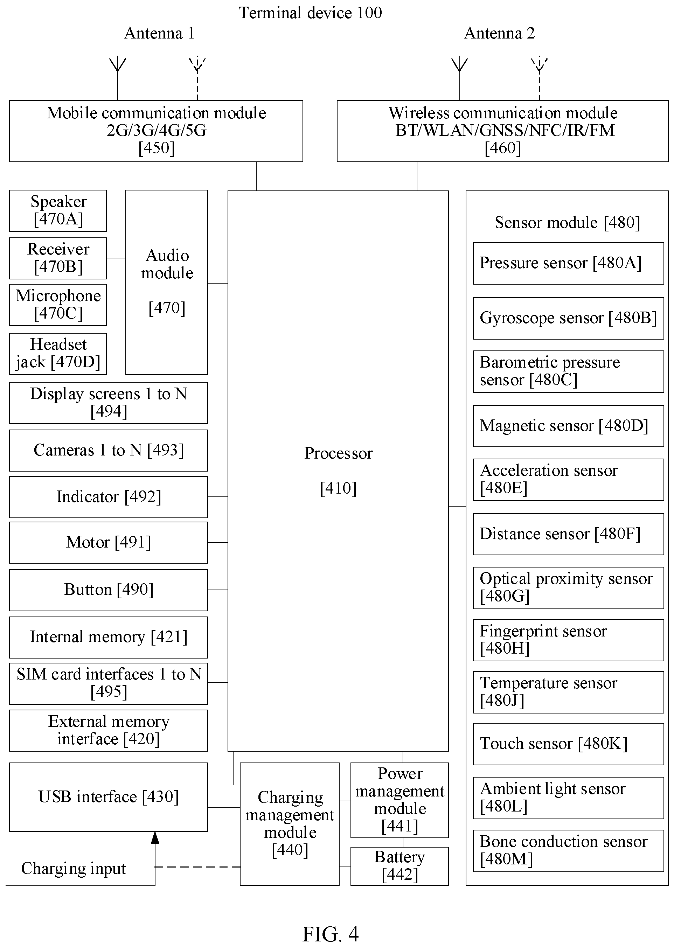

FIG. 4 is a schematic diagram of a structure of a terminal device 100 according to an embodiment of this application. The terminal device 100 may be a first electronic device. As shown in FIG. 4, the terminal device 100 may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display screen 494, a subscriber identification module (subscriber identification module, SIM) card interface 495, and the like. The sensor module 480 may include a pressure sensor 480A, a gyroscope sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may be a nerve center and a command center of the terminal device 100. The controller may generate an operation control signal based on instruction operation code and a timing signal, to control instruction fetching and instruction execution.

A memory may be further disposed in the processor 410 and is configured to store instructions and data. In some embodiments, the memory in processor 410 is a cache. The memory may store instructions or data recently used or cyclically used by the processor 410. If the processor 410 needs to use the instructions or the data again, the processor may directly invoke the instructions or the data from the memory. This avoids repeated access, and reduces waiting time of the processor 410, so that system efficiency is improved.

The charging management module 440 is configured to receive charging input from a charger. The charger may be a wireless charger or a wired charger. In some wired charging embodiments, the charging management module 440 may receive charging input from the wired charger via the USB interface 430. In some wireless charging embodiments, the charging management module 440 may receive wireless charging input by using a wireless charging coil of the terminal device 100. When charging the battery 442, the charging management module 440 may supply power to the electronic device by using the power management module 441.

The power management module 441 is configured to connect the battery 442, the charging management module 440, and the processor 410. The power management module 441 receives input from the battery 442 and/or the charging management module 440, to supply power to the processor 410, the internal memory 421, an external memory, the display screen 494, the camera 493, the wireless communication module 460, and the like. The power management module 441 may be further configured to monitor parameters such as a battery capacity, a battery cycle count, and a battery health status (leakage or impedance). In some other embodiments, the power management module 441 may alternatively be disposed in the processor 410. In some other embodiments, the power management module 441 and the charging management module 440 may alternatively be disposed in a same device.

A wireless communication function of the terminal device 100 may be implemented by using the antenna 1, the antenna 2, the mobile communication module 450, the wireless communication module 460, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further reused to improve utilization of the antennas. For example, the antenna 1 may be reused as a diversity antenna of a wireless local area network. In some other embodiments, the antenna may be used in combination with a tuning switch.

The mobile communication module 450 may provide a wireless communication solution that is applied to the terminal device 100 and that includes 2G/3G/4G/5G and the like. The mobile communication module 450 may include at least one filter, a switch, a power amplifier, a low noise amplifier (low noise amplifier, LNA), and the like. The mobile communication module 450 may receive an electromagnetic wave through the antenna 1, perform processing such as filtering or amplification on the received electromagnetic wave, and transmit the electromagnetic wave to the modem processor for demodulation. The mobile communication module 450 may further amplify a signal modulated by the modem processor. The amplified signal is converted into an electromagnetic wave via the antenna 1 for radiation. In some embodiments, at least some functional modules of the mobile communication module 450 may be disposed in the processor 410. In some embodiments, at least some functional modules of the mobile communication module 450 and at least some modules of the processor 410 may be disposed in a same device.

The wireless communication module 460 may provide solutions for wireless communication applied to the terminal device 100 and including wireless local area networks (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), infrared (infrared, IR), and the like. The wireless communication module 460 may be one or more devices integrating at least one communication processing module. The wireless communication module 460 receives an electromagnetic wave through the antenna 2, performs frequency modulation and filtering on the electromagnetic wave signal, and sends a processed signal to the processor 410. The wireless communication module 460 may further receive a signal to be sent from the processor 410, and perform frequency modulation and amplification on the signal. The signal is converted into an electromagnetic wave via the antenna 2 for radiation.

In some embodiments, in the terminal device 100, the antenna 1 is coupled to the mobile communication module 450, and the antenna 2 is coupled to the wireless communication module 460, so that the terminal device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the display screen 494, the application processor, and the like. The GPU is a microprocessor for image processing and is connected to the display screen 494 and the application processor. The GPU is configured to perform mathematical and geometric calculations for graphics rendering. The processor 410 may include one or more GPUs, and the one or more GPUs execute program instructions to generate or change display information.

The display screen 494 is configured to display an image, a video, or the like.

The display screen 494 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diode, QLED), and the like.

The terminal device 100 may implement a photographing function by using the ISP, the camera 493, the video codec, the GPU, the display screen 494, the application processor, and the like.

The terminal device 100 may implement an audio function such as music playback or recording by using the audio module 470, the speaker 470A, the receiver 470B, the microphone 470C, the headset jack 470D, the application processor, and the like.

The SIM card interface 495 is configured to be connected to a SIM card. The SIM card may be inserted into the SIM card interface 495 or removed from the SIM card interface 495, to be in contact with and be separated from the terminal device 100. The terminal device 100 may support one or N SIM card interfaces, and N is a positive integer greater than 1. The SIM card interface 495 may support a Nano SIM card, a Micro SIM card, a SIM card, and the like. A plurality of cards may be simultaneously inserted into the same SIM card interface 495. Types of the plurality of cards may be the same or different. The SIM card interface 495 may be further compatible with different types of SIM cards. The SIM card interface 495 may be further compatible with an external storage card. The terminal device 100 interacts with a network by using the SIM card, to implement a call function, a data communication function, and the like. In some embodiments, the terminal device 100 uses an eSIM, that is, an embedded SIM card. The eSIM card may be embedded in the terminal device 100, and cannot be separated from the terminal device 100.

Methods in the following embodiments may all be implemented in the terminal device 100 having the foregoing hardware structure.

It may be understood that the structure illustrated in this embodiment does not constitute a specific limitation on the terminal device 100. In some other embodiments, the terminal device 100 may include more or fewer components than those shown in the figure, some components may be combined, some components may be split, or different component arrangements may be used. The components shown in the figure may be implemented by hardware, software, or a combination of software and hardware. For example, the terminal device 100 may further include auxiliary devices such as a mouse, a keyboard, and a picture board.

The terminal device 100 may include various handheld devices, vehicle-mounted devices, wearable devices, or computing devices that have a wireless communication function, or other processing devices connected to a wireless modem; and may further include a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld (handheld) device, a laptop computer (laptop computer), a cordless phone (cordless phone) or a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G home gateway (residential gateway, RG).

Technical solutions in embodiments of this application are described below with reference to the accompanying drawings in embodiments of this application. In the descriptions of this application, unless otherwise specified, "at least one" means one or more, and "a plurality of" means two or more. "At least one type" means one or more types, and "a plurality of types" means two or more types. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" are not intended to a quantity or an execution sequence, and the terms such as "first" and "second" do not indicate a definite difference.

For ease of understanding, a network slice matching method provided in embodiments of this application is specifically described below with reference to the accompanying drawings.

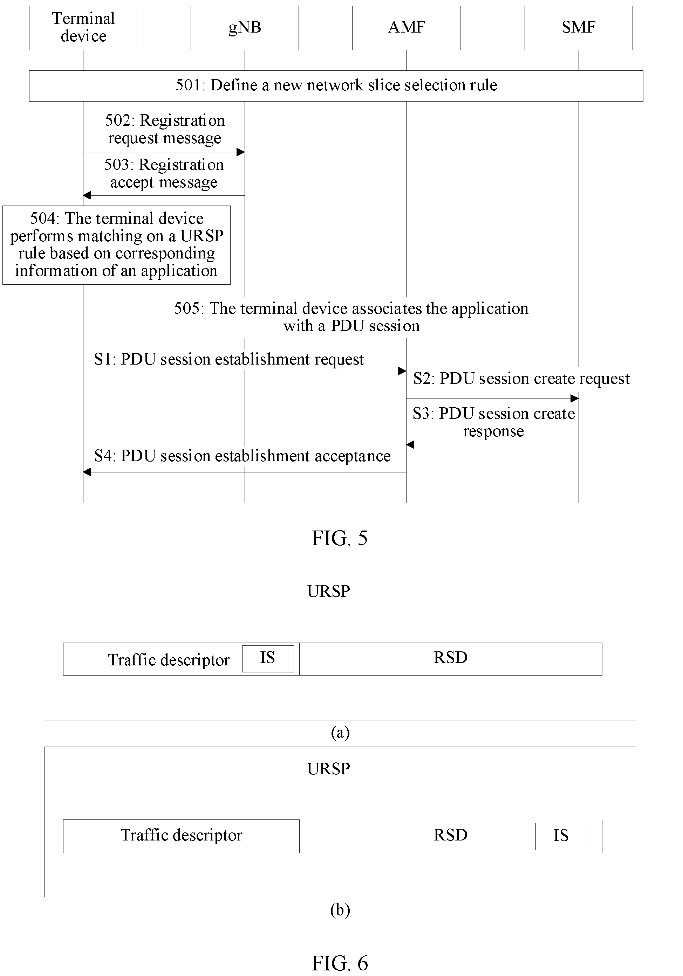

As shown in FIG. 5, an embodiment of this application provides a network slice matching method, including the following steps.

501: Define a new network slice selection rule.

The network slice selection (network slice selection) rule belongs to a part of a URSP rule. For example, the network slice selection rule may be included in a route selection descriptor RSD in the URSP rule. In other words, defining a new network slice selection rule may also be understood as defining a new URSP rule.

The new network slice selection rule may refer to determining, based on network slice indication information (a network slice identifier) in the URSP rule, a data processing level (which may also be referred to as a data processing grade, a data processing manner, a terminal device internal processing level/manner, or the like) corresponding to an application on a terminal device, a network slice (for example, a first network slice) corresponding to the application, and a PDU session supporting the first network slice. In other words, the new network slice selection rule may be used for determining the data processing level corresponding to the application on the terminal device, the network slice (for example, a first network slice) corresponding to the application, and the PDU session supporting the first network slice. For example, the terminal device may determine, according to the new network slice selection rule, that a first application performs processing at a first processing latency level on the terminal device. In addition, the terminal device may associate the first application with the PDU session supporting the first network slice. An identifier of the first network slice may be S-NSSAI 1.

The new network slice selection rule or the new URSP rule may be defined by a standard organization (for example, the 3GPP), or may be defined by an operator (for example, China Mobile, China Unicom, China Telecom, and China Broadnet). The operator may configure the new network slice selection rule (or the new URSP rule) on a network side and a terminal side. The network side refers to a network device, and for example, may include a network device (network element) such as a gNB, an AMF, an SMF, or a PCF. The terminal side may refer to a terminal device, for example, may be UE. Alternatively, an H-PCF (that is, a home PCF) may configure the new network slice selection rule (or the new URSP rule) to the terminal device by using the AMF and the gNB. For example, the new network slice selection rule (or the new URSP rule) may be configured based on a registration command (registration command) message.

The new network slice selection rule may correspond to three possible indication methods of a network slice, including a first possible indication method, a second possible indication method, and a third possible indication method. The first possible indication method and the second possible indication method are explicit indication methods, and the third possible indication method is an implicit indication method.

In the first possible indication method, a new network slice identifier is defined, and the new network slice identifier represents a new network slice type. An original network slice identifier may only indicate a network slice corresponding to an application, so that the terminal device associates traffic of the application with a PDU session supporting the network slice. The new network slice identifier may not only indicate a network slice corresponding to an application, so that the terminal device associates traffic of the application with a PDU session supporting the network slice, but also may indicate a data processing level of the terminal device corresponding to the application, to better meet a service requirement.

For example, first indication information may be added to an S-NSSAI structure. For example, the first indication information may be added to an SD or an SST. The first indication information may be, for example, a new slice type name and an internal slice (internal slice, IS) parameter. The first indication information indicates the data processing level corresponding to the application on the terminal device. The first indication information may have a plurality of values, and different values correspond to different data processing levels. The first indication information may include one bit or more bits.

The data processing level corresponding to the application on the terminal device may include one or more processing priorities (for example, different processing priorities of high, medium, and low, where the different processing priorities correspond to different network transmission channels), one or more processing latency levels (for example, different levels of 1 ms, 10 ms, 100 ms, and the like, or different levels of high, medium, and low), one or more processing rate levels (for example, different levels of 1 Mbps, 10 Mbps, 100 Mbps, 1000 Mbps, and the like, or different levels of high, medium, and low), one or more processing security levels (for example, different security levels of ordinary, TEE, SE, and the like, or different security levels of high, medium, and low), one or more processing reliability levels (for example, reliability levels of one 9, two 9s, three 9s, four 9s, five 9s, and the like, or reliability safety levels of high, medium, and low), and the like. X 9s refer to maximum possible service interruption time during one-year use of the terminal device. X may be one, two, three, four, five, or the like. It may be understood that shorter maximum possible service interruption time for the terminal device indicates higher reliability. For example, three 9s indicate that the maximum possible service interruption time for the terminal device is: (1-99.9%)*365*24=8.76 hours. In other words, the terminal device, when running continuously for one year, may undergo the maximum possible service interruption time of 8.76 hours. 99.9% includes three 9s. Four 9s indicate that the maximum possible service interruption time for the terminal device is: (1-99.99%)*365*24=0.876 hours=52.6 minutes. In other words, the terminal device, when running continuously for one year, may undergo the maximum possible service interruption time of 52.6 minutes. 99.99% includes four 9s.

As shown in Table 1, an example in which the first indication information includes two bits is used. First indication information carried in the S-NSSAI 1 is 00, indicating that the data processing level corresponding to the application on the terminal device is a first processing priority, and the terminal device associates the application with a PDU session supporting the S-NSSAI 1. First indication information carried in S-NSSAI 2 is 01, indicating that the data processing level corresponding to the application on the terminal device is a second processing priority, and the terminal device associates the application with a PDU session supporting the S-NSSAI 2. First indication information carried in S-NSSAI 3 is 10, indicating that the data processing level corresponding to the application on the terminal device is a first processing latency level, and the terminal device associates the application with a PDU session supporting the S-NSSAI 3. First indication information carried in S-NSSAI 4 is 11, indicating that the data processing level corresponding to the application on the terminal device is a second processing latency level, and the terminal device associates the application with a PDU session supporting the S-NSSAI 4.

The first processing priority is different from the second processing priority. The first processing priority may be higher than the second processing priority. For example, processing at the first processing priority may be performed on a call application, and processing at the first processing priority may be performed on a game application. When the call application and the game application are simultaneously run, data traffic of the call application may be preferentially processed. The first processing latency level is different from the second processing latency level. The first processing latency level is higher than the second processing latency level. To be specific, processing latency corresponding to the first processing latency level is smaller than processing latency corresponding to the second processing latency level.

**Table 1**

| Network slice | First indication information | Data processing level corresponding to an application on a terminal device |
|---|---|---|
| S-NSSAI 1 | 00 | First processing priority |
| S-NSSAI 2 | 01 | Second processing priority |
| S-NSSAI 3 | 10 | First processing latency level |
| S-NSSAI 4 | 11 | Second processing latency level |

In the second possible indication method, second indication information may be added based on an existing network slice identifier. For example, the second indication information may be added to an SST, an SD, or an NSSAI information element identifier (Information Element Identifier, IEI). The second indication information may include one bit or more bits. The second indication information indicates the data processing level corresponding to the application on the terminal device, and the data processing level corresponds to a network slice type or a network slice priority.

For example, as shown in Table 2, a type of the first network slice (S-NSSAI 1) is a low-latency slice, the second indication information is added to an identifier of the first network slice, and the second indication information may indicate that the data processing level of the terminal device is a low-latency processing level. The low-latency processing level refers to that service data is preferentially processed inside the terminal device, for example, scheduling is preferentially performed, queuing is preferentially performed, sending is performed in advance by jumping a queue, and sending is preferentially performed. In this way, when a network slice corresponding to a service is a low-latency slice, a terminal device internal processing level for the service is a low-latency processing level, so that a service requirement (for example, low latency) of the service can be ensured. A problem of poor service experience caused by low network slice latency but high terminal device internal processing latency is avoided, enabling an advantage of a low-latency network slice to be fully utilized and meeting a service requirement.

For another example, a type of a second network slice is a high-rate slice (S-NSSAI 2), and after the second indication information is added to an identifier of the second network slice, the second indication information may indicate that the data processing level of the terminal device is a high-rate processing level. The high-rate processing level indicates that a large amount of processing resources (such as memory (memory) resources and computing resources (CPU, GPU, NPU, and the like)) are allocated inside the terminal device to process service data. In this way, when a network slice corresponding to a service is a high-rate slice, a terminal device internal processing level for the service is a high-rate processing level, so that a service requirement (for example, a high rate) of the service can be ensured. A problem of poor service experience caused by a high network slice rate but a low terminal device internal processing rate is avoided, enabling an advantage of a high-rate network slice to be fully utilized and meeting a service requirement.

For another example, a type of a third network slice is a high-security slice (S-NSSAI 3), the second indication information is added to an identifier of the third network slice, and the second indication information may indicate that a terminal device internal processing level is a high-security processing level. The high-security processing level may indicate that the terminal device processes service data in a high-security area (for example, TEE and SE), and/or the terminal device uses a high encryption method for the service data to ensure security of the service data. In this way, when a network slice corresponding to a service is a high-security slice, a terminal device internal processing level for the service is a high-security processing level, so that a service requirement (for example, a high-security service requirement) of the service can be ensured. A problem of poor service experience caused by high network slice security but low terminal device internal processing security is avoided, enabling an advantage of a high-security network slice to be fully utilized and meeting a service requirement.

For another example, a type of a fourth network slice is a high-reliability slice (S-NSSAI 4), the second indication information is added to an identifier of the fourth network slice, and the second indication information may indicate that a terminal device internal processing level is a high-reliability processing level. The high-reliability processing level may indicate that the terminal device backs up and/or transmits service data a plurality of times to ensure reliability of the service data. In this way, when a network slice corresponding to a service is a high-reliability slice, a terminal device internal processing level for the service is a high-reliability processing level, so that a service requirement (for example, a high-reliability service requirement) of the service can be ensured. A problem of poor service experience caused by high network slice reliability but low terminal device internal processing reliability is avoided, enabling an advantage of a high-reliability network slice to be fully utilized and meeting a service requirement.

For another example, a type of a fifth network slice is a large-bandwidth slice (S-NSSAI 5), the second indication information is added to an identifier of the fifth network slice, and the second indication information may indicate that a terminal device internal processing level is a large-bandwidth processing level. The large-bandwidth processing level may indicate, for example, that the terminal device uses a large-bandwidth (for example, 80M/120M) frequency band to transmit service data, or the terminal device uses a plurality of frequency bands to transmit data at the same time. In this way, when a network slice corresponding to a service is a large-bandwidth slice, a terminal device internal processing level for the service is a large-bandwidth processing level, so that a service requirement (for example, a large-bandwidth service requirement) of the service can be ensured. A problem of poor service experience caused by high network slice reliability but a low terminal device internal processing bandwidth is avoided, enabling an advantage of a large-bandwidth network slice to be fully utilized and meeting a service requirement.

**Table 2**

| Network slice | Network slice type | Second indication information | Data processing level corresponding to an application on a terminal device |
|---|---|---|---|
| S-NSSAI 1 | Low latency | 1 | Low-latency processing level |
| S-NSSAI 2 | High rate | 1 | High-rate processing level |
| S-NSSAI 3 | High security | 1 | High-security processing level |
| S-NSSAI 4 | High reliability | 1 | High-reliability processing level |
| S-NSSAI 5 | Large bandwidth | 1 | Large-bandwidth processing level |

In the third possible indication method, an existing network slice identifier implicitly indicates the data processing level corresponding to the application on the terminal device. To be specific, indication information is not added, and the data processing level corresponding to the application on the terminal device is indicated in an implicit manner.

As shown in Table 3, for example, the first network slice (S-NSSAI 1) is the low-latency slice, implicitly indicating that the data processing level of the terminal device is the low-latency processing level. The second network slice (S-NSSAI 2) is the high-rate slice, implicitly indicating that the data processing level of the terminal device is the high-rate processing level. The third network slice (S-NSSAI 3) is the high-security slice, implicitly indicating that the data processing level of the terminal device is the high-security processing level The fourth network slice (S-NSSAI 4) is the high-reliability slice, implicitly indicating that the data processing level of the terminal device is the high-reliability processing level.

**Table 3**

| Network slice | Network slice type | Data processing level corresponding to an application on a terminal device |
|---|---|---|
| S-NSSAI 1 | Low latency | Low-latency processing level |
| S-NSSAI 2 | High rate | High-rate processing level |
| S-NSSAI 3 | High security | High-security processing level |
| S-NSSAI 4 | High reliability | High-reliability processing level |

For another example, as shown in Table 4, it is assumed that a network slice priority may include three levels, which are respectively high, medium, and low. A terminal device processing priority may alternatively include three levels, which are respectively high, medium, and low. A priority of the first network slice (S-NSSAI 1) is high, and a terminal device processing priority corresponding to the first network slice is also high. A priority of the second network slice (S-NSSAI 1) is medium, and a terminal device processing priority corresponding to the first network slice is also high. A priority of the first network slice (S-NSSAI 1) is low, and a terminal device processing priority corresponding to the first network slice is also low. In other words, when a priority of a network slice corresponding to an application is at a high level (in other words, a network slice has a high priority), a terminal device internal processing priority for the application, when processed, is also at a high level, to ensure a service requirement (for example, low latency and high reliability) of the application. When a priority of a network slice corresponding to an application is at a medium level, a terminal device internal processing priority for the application, when processed, is also at a medium level, to better ensure a service requirement (for example, low latency) of the application. When a priority of a network slice corresponding to an application is at a low level, a terminal device internal processing priority for the application, when processed, is also at a low level, to properly meet a service requirement of the application.

**Table 4**

| Network slice | Network slice priority | Terminal device processing priority |
|---|---|---|
| S-NSSAI 1 | High | High |
| S-NSSAI 2 | Medium | Medium |
| S-NSSAI 3 | Low | Low |

For another example, a network slice priority may include two levels, which are respectively high and low. The terminal device processing priority may alternatively include two levels, which are respectively high and low. As shown in Table 5, a priority of the first network slice (S-NSSAI 1) is high, and a terminal device processing priority corresponding to the first network slice is also high. A priority of the second network slice (S-NSSAI 1) is low, and a terminal device processing priority corresponding to the first network slice is also low.

**Table 5**

| Network slice | Network slice priority | Terminal device processing priority |
|---|---|---|
| S-NSSAI 1 | High | High |
| S-NSSAI 2 | Low | Low |

Certainly, the network slice priority may further include more levels, for example, may include four, five, and six levels. This is not limited in this application. The terminal device processing priority may alternatively include more levels, for example, may include four, five, and six levels. This is not limited in this application.

A mapping relationship between the network slice priority and the terminal device processing priority is described above by using a case in which the network slice priority and the terminal device processing priority are in one-to-one correspondence. In a possible case, the network slice priority includes N levels, and the terminal device processing priority includes M levels. N is different from M. In this case, one network slice priority level may correspond to a plurality of processing priority levels, or a plurality of network slice priority levels may correspond to one processing priority level. This is not limited in this application.

For example, as shown in Table 6, the network slice priority may include three levels, which are respectively high, medium, and low. The terminal device processing priority may include two levels, which are respectively high and low. A priority of the first network slice (S-NSSAI 1) is high, and a terminal device processing priority corresponding to the first network slice is also high. A priority of the second network slice (S-NSSAI 2) is medium, and a terminal device processing priority corresponding to the second network slice is low. A priority of the third network slice (S-NSSAI 3) is low, and a terminal device processing priority corresponding to the third network slice is low. In other words, a plurality of network slice priority levels may correspond to one terminal device processing priority level.

**Table 6**

| Network slice | Network slice priority | Terminal device processing priority |
|---|---|---|
| S-NSSAI 1 | High | High |
| S-NSSAI 2 | Medium | Low |
| S-NSSAI 3 | Low | Low |

In a possible design, the network slice priority may be determined based on a type of the network slice. For example, priorities of network slice types such as uRLLC, eMBB, and mMTC are ranked from high to low.

An example in which the application is the first application, according to the new network slice selection rule (to be specific, based on a network slice identifier in the new URSP rule), it may be determined that the first application undergoes data processing at the first data processing level (such as the low-latency processing level or the high-rate processing level) on the terminal device. A network slice corresponding to the first application is the first network slice. In addition, the terminal device may associate the first application with a PDU session supporting the first network slice. The first network slice is identified by using a first S-NSSAI.

That the first application undergoes the data processing at the first data processing level on the terminal device means that data traffic of the first application (traffic of application) undergoes the data processing at the first data processing level on the terminal device.

That the terminal device associates the first application with the PDU session supporting the first network slice means that the terminal device transmits or routes the data traffic of the first application via the PDU session supporting the first network slice (traffic of the application shall be routed via a PDU Session supporting any of the included S-NSSAIs).

In a possible design, the H-PCF (that is, the home PCF) may define a new URSP rule, and forward the new URSP rule to the terminal device by using the AMF and the gNB. Alternatively, the operator may configure a new URSP rule for the terminal device. For example, as shown in section (a) in FIG. 6, the new URSP rule may be adding a newly defined parameter (for example, an internal slice (internal slice, IS)) to a URSP traffic descriptor. Alternatively, as shown in section (b) in FIG. 6, the new URSP rule may be adding a newly defined parameter IS to an RSD of the URSP. The IS may correspond to one or more values, indicating mapping relationships between different network slice priorities and different terminal device processing priorities. For example, when the value of the IS is a first value (for example, 01), indicating a mapping relationship between a high-level network slice priority and a high-level terminal device processing priority. This indicates that a service matching the traffic descriptor correspond to the high-level network slice priority and the high-level terminal device processing priority. When the value of the IS is a second value (for example, 11), indicating a mapping relationship between a low-level network slice priority and a low-level terminal device processing priority. This indicates that a service matching the traffic descriptor correspond to the low-level network slice priority and the low-level terminal device processing priority

In a possible design, different values of the IS may correspond to different S-NSSAI. For example, an IS 1 (to be specific, the value of the IS is the first value) corresponds to one piece of S-NSSAI (for example, S-NSSAI-1), and an IS 2 (to be specific, the value of the IS is the second value) corresponds to another piece of S-NSSAI (for example, S-NSSAI-2). Assuming that a priority of the S-NSSAI-1 is at a high level, the IS 1 indicates that a high-level slice priority corresponds to a high-level terminal device processing priority. In other words, when a service corresponds to the S-NSSAI-1, a terminal device internal processing priority for the service is also at a high level. Assuming that a priority of the S-NSSAI-2 is at a low level, the IS 2 indicates that a low-level slice priority corresponds to a low-level terminal device processing priority. In other words, when a service corresponds to the S-NSSAI-2, a terminal device internal processing priority for the service is also at a low level.

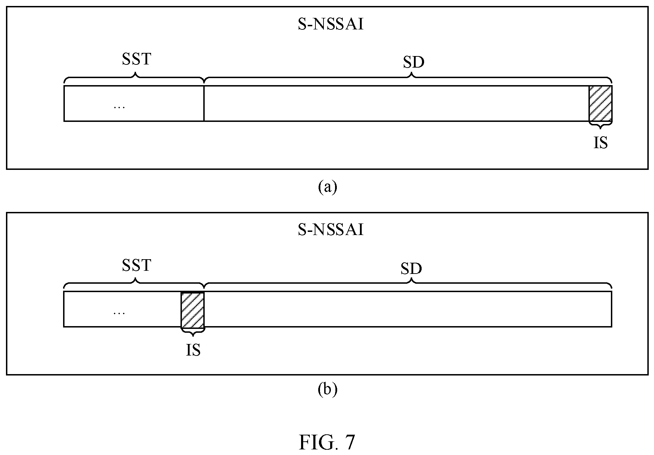

In another possible design, a plurality of pieces of new S-NSSAI may be defined, and a composition structure of the new S-NSSAI may be newly added with a cell related to the IS. For example, as shown in section (a) in FIG. 7, an SD of the new S-NSSAI may include the IS. Alternatively, as shown in section (b) in FIG. 7, an SST of the new S-NSSAI may include the IS.

Different S-NSSAI may correspond to ISs with different values. For example, the IS 1 (to be specific, the value of the IS is the first value) corresponds to a new piece of S-NSSAI (for example, S-NSSAI-1), and the IS 2 (to be specific, the value of the IS is the second value) corresponds to another new piece of S-NSSAI (for example, S-NSSAI-2). Assuming that a priority of the S-NSSAI-1 is at a high level, the IS 1 indicates that a high-level slice priority corresponds to a high-level terminal device processing priority. In other words, when a service corresponds to (matches) the S-NSSAI-1, a terminal device internal processing priority for the service is also at a high level. Assuming that a priority of the S-NSSAI-2 is at a low level, the IS 2 indicates that a low-level slice priority corresponds to a low-level terminal device processing priority. In other words, when a service corresponds to the S-NSSAI-2, a terminal device internal processing priority for the service is also at a low level.

502: The terminal device sends a registration request message to the gNB.

Before executing a service, the terminal device may perform registration on a network, to be specific, may send the registration request (registration request) message to the gNB. The registration request message may carry requested NSSAI (requested NSSAI). To be specific, the terminal device may request a network slice that can be used in a current PLMN and a current registration area from a network side.

The requested NSSAI may include at least one piece of S-NSSAI determined by the terminal device. NSSAI included in the "requested NSSAI" may be selected from "configured NSSAI", "allowed NSSAI", or "NSSAI configured by default". The "requested NSSAI" does not include any piece of S-NSSAI currently rejected by the network.

It should be noted that, a network slice identifier (that is, the at least one piece of S-NSSAI) carried in the registration request message may be the network slice identifier in one of the foregoing three indication methods. To be specific, the registration request message may carry a new network slice identifier, the new network slice identifier carries the first indication information, and the first indication information indicates the data processing level corresponding to the application on the terminal device. Alternatively, the registration request message may carry an existing network slice identifier and the second indication information, and the second indication information indicates the data processing level corresponding to the application on the terminal device. Alternatively, the registration request message may carry an existing network slice identifier, and the existing network slice identifier may implicitly indicate the data processing level of the terminal device.

After receiving the registration request message from the terminal device, the gNB may forward the registration request message to the AMF. If the terminal device is in a CM-CONNECTED state, the gNB may forward the registration request message to the AMF based on an N2 connection of the terminal device. If the terminal device is in a CM-IDLE state, and the terminal device does not include the "requested NSSAI" and a globally unique AMF identifier (globally unique AMF identifier, GUAMI) when establishing a connection with the RAN, the gNB may forward the registration request message to a default AMF.

The AMF may verify whether the S-NSSAI in the "requested NSSAI" is allowed based on "subscribed S-NSSAI". The "subscribed S-NSSAI" may be obtained by the AMF from a unified data management UDM network element. The AMF may determine a registration area, so that all pieces of S-NSSAI of the "allowed NSSAI" in the registration area are available in all tracking areas of the registration area, and then the AMF returns the "allowed NSSAI" to the terminal device. Optionally, the AMF returns mapping from the "allowed NSSAI" to the "subscribed S-NSSAI" to the terminal device. Optionally, the AMF may return one or more pieces of "rejected S-NSSAI" and a rejection reason of each piece of S-NSSAI. If an S-NSSAI reject reason value indicates that particular identity authentication and authorization of a network slice fails or is revoked, the terminal device may reattempt to request the S-NSSAI based on a local policy.

The AMF sends a registration accept (registration accept) message to the gNB. The registration accept message indicates that the registration request has been accepted by the AMF. After receiving the registration accept message from the AMF, the gNB may forward the registration accept message to the terminal device, in other words, may perform step 503.

503: The gNB sends the registration accept (registration accept) message to the terminal device.

The registration accept message may include allowed NSSAI (allowed NSSAI), and the allowed NSSAI indicates S-NSSAI allowed by a network in requested NSSAI of the terminal device.

Optionally, the registration accept message may further include rejected NSSAI (rejected NSSAI), and the rejected NSSAI indicates S-NSSAI rejected by a network in requested NSSAI of the terminal device.

504: The terminal device performs matching on the URSP rule based on corresponding information of the application.

The terminal device obtains the corresponding information (corresponding information from the application) of the application, or the terminal device recognizes the corresponding information of the application. Optionally, the application may send the corresponding information of the application to a processing module that executes the URSP rule in the terminal device. Alternatively, a processing module that executes the URSP rule may obtain the corresponding information of the application from a particular memory. In other words, the corresponding information of the application is configured to the terminal device in advance, and the terminal device may obtain the corresponding information of the application in advance. This is not limited in this application.

The corresponding information of the application is used by the terminal device to perform URSP rule (new URSP rule) matching. For example, the corresponding information of the application may include an identifier (APP ID) of the application. Optionally, the corresponding information of the application may include information about a network slice that the application wishes to use, for example, a first network slice identifier (S-NSSAI 1). The first network slice identifier may be the network slice identifier in one of the foregoing three indication methods. Optionally, the corresponding information of the application may include first information. The first information indicates the information about the network slice that the application wishes to use (in other words, there is a mapping relationship between the first information and the information about the network slice that the application wishes to use), for example, the first network slice identifier (the S-NSSAI 1).

There may be one or more URSP rules (that is, new URSP rules) configured by the terminal device. A plurality of URSP rules may correspond to different priorities. The terminal device may match the corresponding information of the application according to a priority order of the URSP rules. For example, it is assumed that the plurality of URSP rules configured by the terminal device include a URSP 1 and a URSP 2. The URSP 1 is a URSP rule indicating a low-latency processing level, and the URSP 2 is a URSP rule indicating a high-rate processing level. A priority of the URSP 1 is higher than a priority of the URSP 2. Therefore, the terminal device may first match the corresponding information of the application with the URSP 1. If the corresponding information of the application does not match the URSP 1, the corresponding information of the application is then matched with the URSP 2.

In this embodiment of this application, that the terminal device matches the corresponding information of the application with the URSP rule is specifically to match the corresponding information of the application with a component in the URSP rule, for example, to match the corresponding information of the application with a traffic descriptor in the URSP rule, or to match the corresponding information of the application with a route selection descriptor in the URSP rule.

If the corresponding information of the application matches the URSP 1, the application is associated with a PDU session (for example, a PDU session 1) corresponding to an RSD of the URSP 1, in other words, the terminal device routes (routes) data traffic of the application to the PDU session 1. The PDU session corresponding to the RSD of the URSP 1 is a PDU session supporting parameters in the RSD of the URSP 1. The parameters in the RSD of the URSP 1 include the S-NSSAI, an DNN, an SSC mode, and the like. The S-NSSAI in the RSD may be the network slice identifier in one of the foregoing three indication methods.

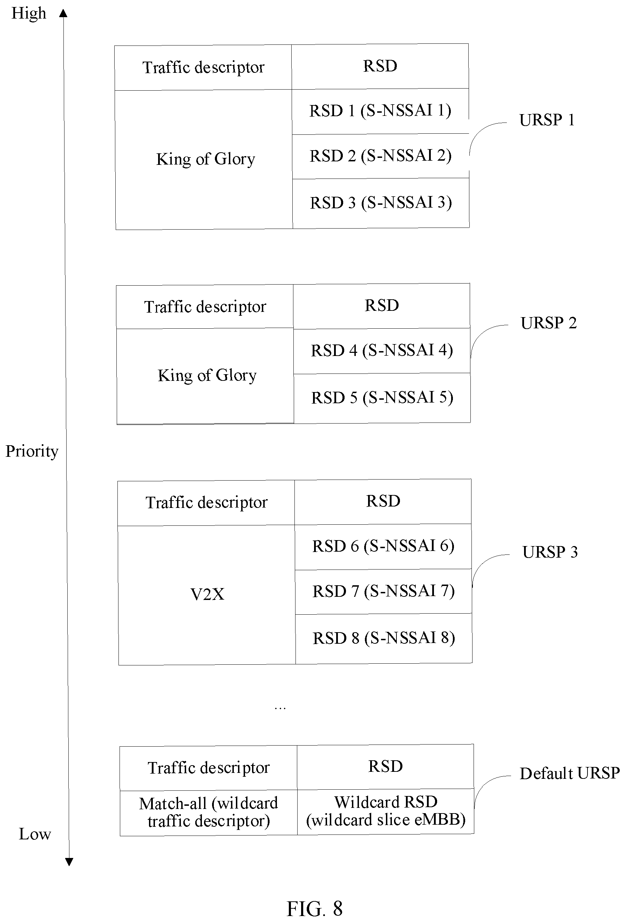

For example, as shown in FIG. 8, the one or more URSP rules (new URSP rules) configured or obtained by the terminal device may include a URSP 1, a URSP 2, a URSP 3, a default URSP rule, and the like. The URSP 1 includes a traffic descriptor and three RSDs. The traffic descriptor includes an application identifier (for example, King of Glory^{®}). The RSD 1 includes S-NSSAI-1, the RSD 2 includes S-NSSAI-2, and the RSD 3 includes S-NSSAI-3. The URSP 2 includes a traffic descriptor and two RSDs. The traffic descriptor includes an application identifier (for example, King of Glory^{®}). An RSD 4 includes S-NSSAI-4, and an RSD 5 includes S-NSSAI-5. The URSP 3 includes a traffic descriptor and three RSDs. The traffic descriptor includes an application identifier (for example, V2X). An RSD 6 includes S-NSSAI-6, an RSD 7 includes S-NSSAI-7, and an RSD 8 includes S-NSSAI-8. The default URSP includes a wildcard traffic descriptor and a wildcard RSD. The wildcard traffic descriptor may match all services, the wildcard RSD includes a wildcard slice, and a type of the wildcard slice is an eMBB.

Currently, the terminal device initiates a cloud game application (for example, King of Glory^{®}), and an application identifier corresponding to King of Glory^{®} is King of Glory. If the application identifier corresponding to King of Glory^{®} matches the traffic descriptor in the URSP 1, and information about a network slice (for example, the S-NSSAI 1) that King of Glory^{®} wishes to use matches a network slice identifier in the RSD 1, the terminal device determines that a URSP rule matching a current to-be-initiated service is the URSP 1.

The terminal device determines whether the network slice (S-NSSAI 1) indicated by the RSD 1 belongs to allowed NSSAI of a current network. If the network slice (for example, the S-NSSAI 1) indicated by the RSD 1 belongs to the allowed NSSAI of the current network, King of Glory^{®} may be associated with a PDU session supporting the RSD 1 in the URSP 1. It should be noted that, the network slice (for example, the S-NSSAI 1) indicated by the RSD 1 may not only indicate a network slice corresponding to King of Glory^{®}, so that the terminal device associates traffic of King of Glory^{®} with a PDU session supporting the network slice, but also may indicate a data processing level (for example, a low-latency processing level) of the terminal device corresponding to King of Glory^{®}, to better meet a service requirement. In this way, poor service experience caused by low network slice latency but high terminal device internal processing latency is avoided, enabling an advantage of the network slice to be fully utilized.

In a possible design, the traffic descriptor or the RSD in the URSP rule may include a parameter indicating the data processing level of the terminal device. The corresponding information of the application may also carry a parameter indicating the data processing level of the terminal device. In a process of performing URSP rule matching, the terminal device may match the parameter that indicates the data processing level of the terminal device and that is carried in the corresponding information of the application with the parameter that indicates the data processing level of the terminal device and that is in the URSP rule.

For example, an example in which the RSD in the URSP rule includes a parameter (for example, the parameter may be an IS) indicating the data processing level of the terminal device is used for describing the URSP matching process. The IS indicates the data processing level corresponding to the application on the terminal device. For the data processing level corresponding to the application on the terminal device, refer to the foregoing related descriptions, and details are not described herein again.

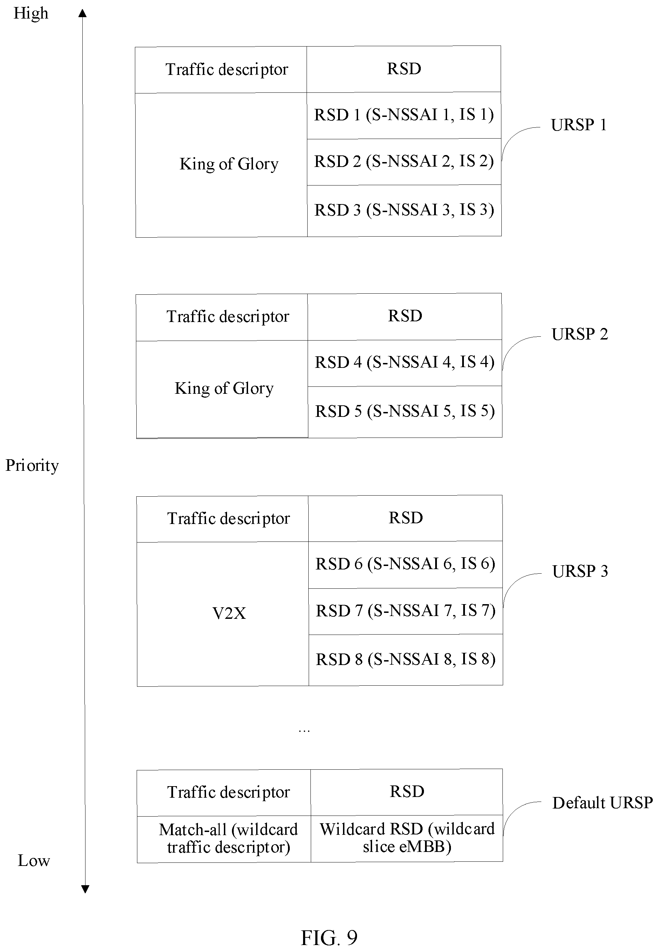

As shown in FIG. 9, the one or more URSP rules configured or obtained by the terminal device may include a URSP 1, a URSP 2, a URSP 3, a default URSP rule, and the like. The URSP 1 includes a traffic descriptor and three RSDs. The traffic descriptor includes an application identifier (for example, King of Glory^{®}). The RSD 1 includes S-NSSAI-1 and an IS (for example, an IS 1), the RSD 2 includes S-NSSAI-2 and an IS (for example, an IS 2), and the RSD 3 includes S-NSSAI-3 and an IS (for example, an IS 3). The URSP 2 includes a traffic descriptor and two RSDs. The traffic descriptor includes an application identifier (for example, King of Glory^{®}). The RSD 4 includes S-NSSAI-4 and an IS (for example, an IS 4), and the RSD 5 includes S-NSSAI-5 and an IS (for example, an IS 5). The URSP 3 includes a traffic descriptor and three RSDs. The traffic descriptor includes an application identifier (for example, V2X). The RSD 6 includes S-NSSAI-6 and an IS (for example, an IS 6), the RSD 7 includes S-NSSAI-7 and an IS (for example, an IS 7), and the RSD 8 includes S-NSSAI-8 and an IS (for example, an IS 8). The default URSP includes a wildcard traffic descriptor and a wildcard RSD. The wildcard traffic descriptor may match all services, the wildcard RSD includes a wildcard slice, and a type of the wildcard slice is an eMBB.

Currently, the terminal device initiates a cloud game application (for example, King of Glory^{®}), and an application identifier corresponding to King of Glory^{®} is King of Glory, and a corresponding IS is the IS 1. If the application identifier corresponding to King of Glory^{®} matches the traffic descriptor in the URSP 1, the IS corresponding to King of Glory^{®} matches the IS in the RSD 1, and information about a network slice that King of Glory^{®} wishes to use matches a network slice identifier in the RSD 1, the terminal device determines that a URSP rule matching a current to-be-initiated service is the URSP 1.

The terminal device determines whether the network slice (S-NSSAI 1) indicated by the RSD 1 belongs to allowed NSSAI of a current network. If the network slice (for example, the S-NSSAI 1) indicated by the RSD 1 belongs to the allowed NSSAI of the current network, King of Glory^{®} may be associated with a PDU session supporting the RSD 1 in the URSP 1. It should be noted that, the network slice identifier (for example, the S-NSSAI 1) in the RSD 1 in the URSP 1 may indicate a network slice corresponding to King of Glory^{®}, so that the terminal device associates traffic of King of Glory^{®} with a PDU session supporting the network slice. The IS 1 in the RSD 1 in the URSP 1 may indicate a data processing level (for example, a low-latency processing level) of the terminal device corresponding to King of Glory^{®}, to better meet a service requirement. In this way, poor service experience caused by low network slice latency but high terminal device internal processing latency is avoided, enabling an advantage of the network slice to be fully utilized.

In some other embodiments, when performing URSP matching based on the corresponding information of the application, the terminal device may use another manner. For example, URSP matching is performed based on domain name information (for example, a fully qualified domain name (fully qualified domain name, FQDN)) corresponding to a to-be-initiated service, destination server IP address information, or the like, or the foregoing matching action is directly performed through a modem layer without participation of an application layer. This is not limited in this embodiment of this application.

In addition, if none of one or more pieces of S-NSSAI corresponding to a URSP rule that matches a current to-be-initiated service (or a current application) and that is in one or more URSP rules belongs to allowed NSSAI of a current network (in other words, is supported by the network), the URSP matching is stopped. Alternatively, if none of one or more pieces of S-NSSAI corresponding to an RSD that matches a current to-be-initiated service and that is in one or more RSDs belongs to allowed NSSAI of a current network, the URSP matching is stopped.

505: The terminal device associates the application with a PDU session.

In a possible design, if there is already a PDU session supporting a network slice identifier (for example, the S-NSSAI 1) that an application wishes to use, the terminal device associates the application with the PDU session, in other words, the terminal device routes (routes) data traffic of the application to the PDU session. If there is no PDU session supporting a network slice identifier (for example, the S-NSSAI 1) that an application wishes to use, the terminal device initiates establishment of a PDU session supporting the S-NSSAI 1, to associate the application with the established PDU session.

A specific establishment process of the PDU session includes the following steps.

S1: The terminal device sends a PDU session establishment request to the AMF.

The terminal device may send the PDU session establishment request (PDU session establishment request) to the AMF by using a non-access stratum (non-access stratum, NAS) message.

The PDU session establishment request may include parameters such as a PDU session ID (PDU session ID), a PDU session type (PDU Session type), an SSC Mode, a DNN, and S-NSSAI (S-NSSAI corresponding to a service). The S-NSSAI in the PDU session establishment request may be the network slice identifier in one of the foregoing three indication methods.

The S-NSSAI carried in the PDU session request message is forwarded to the AMF over a wireless network. The AMF checks the S-NSSAI in the PDU session request message, selects a corresponding SMF based on a slice capability condition supported by each SMF in a network, and forwards the session establishment request to the SMF.

S2: The AMF sends a PDU session create request (PDU session create request) to the SMF.

The AMF may send the PDU session create request to the SMF by using HTTP2 POST. The PDU session create request may include parameters such as a SUPI, a DNN, a PDU session ID, S-NSSAI, and a request type.

The SMF may establish a context of the PDU session. The SMF may obtain subscription information responded by a user from the UDM, and then deliver a policy control message to the UPF, the RAN, and the terminal device. The UPF, the RAN, and the terminal device establish a connection of the PDU session.

S3: The SMF sends a session create response (PDU session create response) to the AMF.

After determining that the PDU session connection establishment is completed, the SMF may send a session create response to the AMF, to indicate that the PDU session is successfully established.

S4: The AMF sends PDU session establishment acceptance (PDU session establishment accept) to the terminal device.

The AMF replies a session establishment request response to the terminal device, to indicate that the PDU session is successfully established. The terminal device associates the application with a newly established PDU session, in other words, the terminal device routes data traffic of the application to the newly established PDU session.

In addition, if the PDU session establishment request sent by the terminal device is rejected by the network side, in other words, the establishment of the PDU session fails, the terminal device re-matches another URSP rule, and initiates establishment of a PDU session based on the re-matched URSP rule.

Based on the method provided in this embodiment of this application, the terminal device may match the corresponding information of the application with the at least one URSP rule. If a URSP rule (for example, the first URSP rule) matches the corresponding information of the application, the terminal device may process the data traffic of the application based on the data processing level indicated by the network slice identifier (the first network slice identifier) in the first URSP rule. In this way, the terminal device may transmit the data traffic of the application by using a network slice corresponding to the first network slice identifier, and process the data traffic of the application based on the data processing level indicated by the first network slice identifier. In other words, transmission and processing performance of service data may be jointly ensured by using the network slice and based on the data processing level of the terminal device, to meet service requirements of different services.

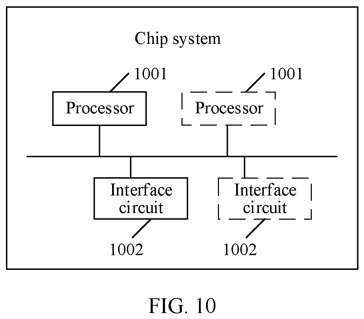

An embodiment of this application further provides a chip system. As shown in FIG. 10, the chip system includes at least one processor 1001 and at least one interface circuit 1002. The processor 1001 and the interface circuit 1002 may be interconnected by lines. For example, the interface circuit 1002 may be configured to receive a signal from another apparatus (for example, a memory of a terminal device). For another example, the interface circuit 1002 may be configured to send a signal to another apparatus (for example, the processor 1001).

For example, the interface circuit 1002 may read instructions stored in the memory in the terminal device and send the instructions to the processor 1001. When the instructions are executed by the processor 1001, the terminal device (for example, the terminal device 100 shown in FIG. 4) is enabled to perform the steps in the foregoing embodiments.

Certainly, the chip system may further include other discrete devices. This is not specifically limited in embodiments of this application.

An embodiment of this application further provides a computer-readable storage medium, and the computer-readable storage medium includes computer instructions. When the computer instructions are run on a terminal device (for example, the terminal device 100 shown in FIG. 4), the terminal device 100 is enabled to perform the functions or the steps performed by the terminal device in the foregoing embodiments, and a network device is enabled to perform the functions or the steps performed by the network device in the foregoing method embodiments.

An embodiment of this application further provides a computer program product. When the computer program product runs on a computer, the computer is enabled to perform the functions or steps performed by the terminal device in the foregoing method embodiments.

An embodiment of this application further provides a processing apparatus. The processing apparatus may be divided into different logical units or modules based on functions, and the units or modules perform different functions, so that the processing apparatus performs the functions or steps performed by the terminal device or the network device in the foregoing method embodiments.

The foregoing descriptions about implementations allow a person skilled in the art to clearly understand that, the foregoing functions may be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the division into modules or units is merely a logical function division and may be another division in actual implementations. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated. Parts displayed as a unit may be one physical unit or a plurality of physical units, located at the one position, or may be distributed to different positions. Some or all of the units may be selected based on actual requirements to achieve the objectives of the solutions of embodiments.

In addition, functional units in embodiments of this application may be integrated into one processing unit, or each of the units may be physically separated, or two or more units may be integrated into one unit. The integrated unit may be implemented in the form of hardware, or may be implemented in the form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk drive, a read-only memory (read-only memory, ROM), a random access-memory (random-access memory, RAM), a magnetic disk, or an optical disc.

The foregoing content is only specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A network slice matching method, wherein the method comprises:
obtaining, by a terminal device, corresponding information of an application;
matching, by the terminal device, the corresponding information of the application with at least one route selection policy URSP rule, wherein the at least one URSP rule comprises a first URSP rule, the first URSP rule comprises a first network slice identifier, and the first network slice identifier explicitly or implicitly indicates a data processing level of the terminal device; and
if the first URSP rule matches the corresponding information of the application, processing data traffic of the application based on the data processing level indicated by the first network slice identifier.

2. The method according to claim 1, wherein
the corresponding information of the application comprises the first network slice identifier.

3. The method according to claim 1, wherein
the corresponding information of the application comprises first information, and the first information indicates the first network slice identifier.

4. The method according to any one of claims 1 to 3, wherein that the first URSP rule comprises a first network slice identifier comprises:
the first URSP rule comprises a first route selection descriptor RSD, and the first RSD comprises the first network slice identifier.

5. The method according to any one of claims 1 to 4, wherein the method further comprises:
determining, by the terminal device according to the first URSP rule, a protocol data unit PDU session corresponding to the application.

6. The method according to any one of claims 1 to 5, wherein that the first network slice identifier explicitly indicates a data processing level of the terminal device comprises:
the first network slice identifier comprises first indication information, and the first indication information indicates the data processing level of the terminal device, wherein
the first indication information comprises a plurality of values, each of the plurality of values corresponds to one data processing level, and different values correspond to different data processing levels.

7. The method according to any one of claims 1 to 5, wherein that the first network slice identifier explicitly indicates a data processing level of the terminal device comprises:
the first network slice identifier comprises second indication information, the second indication information indicates the data processing level of the terminal device, and the data processing level of the terminal device has a correspondence with a network slice type or a network slice priority corresponding to the first network slice identifier.

8. The method according to claim 2 or 3, wherein
the first network slice identifier comprises a slice service type SST and a slice differentiator SD, and the SST or the SD comprises the first indication information or the second indication information.

9. The method according to any one of claims 1 to 8, wherein
the data processing level of the terminal device comprises at least one of a processing priority, a processing latency level, a processing rate level, a processing security level, a processing reliability level, or a processing bandwidth level.

10. The method according to any one of claims 1 to 9, wherein before the obtaining, by a terminal device, corresponding information of an application, the method further comprises:
sending, by the terminal device, a registration request message to a first network device, wherein the registration request message carries the first network slice identifier; and
receiving, by the terminal device, a registration accept message from the first network device, wherein the registration accept message comprises information about a slice allowed to be accessed.

11. The method according to any one of claims 1 to 10, wherein the method further comprises:
sending, by the terminal device, a PDU session request message to an access and mobility management function AMF network element, wherein the PDU session request message comprises the first network slice identifier.

12. The method according to any one of claims 1 to 11, wherein
the corresponding information of the application further comprises an identifier of the application, the first URSP rule further comprises a traffic descriptor, and the traffic descriptor matches the identifier of the application.

13. A computer-readable storage medium, comprising computer instructions, wherein
when the computer instructions are run on a terminal device, the terminal device is enabled to perform the method according to any one of claims 1 to 12.

14. A terminal device, wherein the terminal device comprises: a wireless communication module, a memory, and one or more processors, and the wireless communication module, the memory, and the processor are coupled; and
the memory is configured to store computer program code, and the computer program code comprises computer instructions; and when the computer instructions are executed by the processor, the terminal device is enabled to perform the method according to any one of claims 1 to 12.
